(19) Europäisches Patentamt
European Patent Office
Office européen des brevets

(11) EP 2 717 501 A1

(12) **EUROPEAN PATENT APPLICATION**
published in accordance with Art. 153(4) EPC

(43) Date of publication:
**09.04.2014 Bulletin 2014/15**

(51) Int Cl.:
*H04L 1/00* (2006.01)

(21) Application number: **12789637.1**

(86) International application number:
**PCT/CN2012/070941**

(22) Date of filing: **07.02.2012**

(87) International publication number:
**WO 2012/159459 (29.11.2012 Gazette 2012/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.05.2011 CN 201110136661**

(71) Applicant: **ZTE Corporation
Shenzhen, Guangdong 518057 (CN)**

(72) Inventors:
• **LI, Jinfeng
Shenzhen
Guangdong 518057 (CN)**
• **LU, Qinbo
Shenzhen
Guangdong 518057 (CN)**

(74) Representative: **Modiano, Micaela Nadia et al
Modiano & Partners
Thierschstrasse 11
80538 München (DE)**

(54) **UPLINK RECEIVING METHOD AND DEVICE**

(57) The disclosure discloses an uplink receiving method and an uplink receiving device. The method includes: a branch metric, a forward metric and a backward metric of each state at a current moment are determine using a channel response estimation value of each state and a received signal at the current moment; and a Maximum A Posteriori (MAP) of the received signal at the current moment is determined using the branch metric, the forward metric and the backward metric of each state at the current moment. With the disclosure, a high-speed time-varying channel can be tracked in real time by combining MAP balancing with channel update and adaptively determining a channel response estimation value in each state at each moment, thereby effectively overcoming a defect of the related art and significantly improving the performance of an MAP balancing algorithm in a high-speed channel.

Fig. 3

Estimating an initial value of a channel by an LS algorithm using a training sequence and a received signal, and initializing a forward metric and a backward metric — S101

Calculating all branch metrics, each corresponding to a transfer from a state at a moment l-1 to a state at a moment l — S102

Calculating all possible forward metrics transferred from each state at the moment l-1 to the current state at the moment l

Selecting the maximum forward metric in all the possible forward metrics as a forward metric at the moment l, and recording an original state, the current state and the symbol vector corresponding to the optimal transfer

Calculating a transfer error

Calculating a channel response estimation value corresponding to the current state at the moment l — S103

Determining whether l is less than k — S104

Yes / No

Let $l = l + 1$

Calculating a backward metric — S105

Calculating an MAP of an information bit at the moment l — S106

EP 2 717 501 A1

**Description**

**TECHNICAL FIELD**

The disclosure relates to the field of communication technology, and in particular to an uplink receiving method and an uplink receiving device.

**BACKGROUND**

A main objective of a Maximum A Posteriori (MAP) decoder is to maximize a posteriori probability $P(\hat{u}_l = u_l|r)$ of correctly decoding information bit $u_l$ at a moment $l$, where $l = 0,1,..., K$ -1, $r$ represents a received symbol, $u_l$ represents a symbol actually transmitted at the moment $l$, $\hat{u}_l$ represents an estimated symbol transmitted at the moment $l$, and K is a positive integer and is specifically determined based on an actual demand.

The probability $P(\hat{u}_l = u_l|r)$ can be obtained by summing state transfer probabilities in a grid diagram. BCJR (Bahl, Cocke, Jelinek and Raviv), as an MAP decoder, is configured to minimize a Bit Error Rate (BER) from the perspective of total probability and is an existing optimal soft output decoder.

An existing BCJR algorithm is based on a time-invariant channel model and has high performance in a low-speed channel but poor performance in a high-speed frequency selective fading channel (such as a high-speed rail), and especially at a high encoding rate, its performance will be reduced sharply.

Balanced demodulation is mainly to eliminate the influence of a channel and recover a transmitted signal, whereas eliminating the influence of a channel to the greatest extent is based on a precise estimation on a channel impulse response. Existing MAP algorithms are mostly based on a time-invariant channel to estimate a channel impulse response by sending a group of known training sequences and utilizing received data corresponding to the training sequences. However, this way has two following defects in a high-speed channel.

Only one channel response can be estimated using a group of training sequences and is not constant within the time period of the group of known training sequences, so that an estimated channel impulse response is not precise.

A difference between a channel impulse response estimated using a training sequence and a real channel impulse response will increase with the increase of a distance between a current symbol and a training sequence symbol, so that reliability will absolutely get worse if the time-invariant channel impulse response estimation is utilized for balanced demodulation.

To sum up, existing MAP algorithms cannot be applied to a high-speed frequency selective fading channel.

**SUMMARY**

Embodiments of the disclosure provide an uplink receiving method and an uplink receiving device, so as to detect a received signal, in particular to detect an MAP of a received signal in a high-speed channel.

An uplink receiving method provided by an embodiment of the disclosure includes:

a branch metric, a forward metric and a backward metric of each state at a current moment are determined using a channel response estimation value of each state and a received signal at the current moment; and

an MAP of the received signal at the current moment is determined using the branch metric, the forward metric and the backward metric of each state at the current moment.

Preferably, the process that a branch metric, a forward metric and a backward metric of each state at a current moment are determined using a channel response estimation value of each state and a received signal at the current moment may include:

the channel response estimation value of a current state at the current moment is determined;

a branch metric corresponding to a transfer from each state at a previous moment to the current state at the current moment is determined using the channel response estimation value of the current state at the current moment and the received signal; and

the forward metric and the backward metric of the current state at the current moment are determined using the branch metric corresponding to the transfer from each state at the previous moment to the current state at the current moment.

Preferably, the process that a channel response estimation value of a current state at the current moment is determined may include:

all branch metrics, each corresponding to a transfer from a state at the previous moment to a state at the current moment are determined;

all forward metrics, each corresponding to a transfer from each state at a previous moment $l$ - 1 to a state $S$ at a current moment $l$ are calculated according to all the branch metrics;

the maximum forward metric in all the forward metrics is taken as a forward metric at the current moment $l$, and an original state $s'$, a state $S$ and a symbol vector corresponding to the forward metric are recorded;

a transfer error for a transfer from the original state $s'$ to the state $S$ is calculated using the original state $s'$, the state $S$ and the symbol vector; and

a channel response estimation value of the state $S$ at the current moment $l$ is determined using the transfer error.

Preferably, the process that a transfer error for a transfer from the original state $s'$ to the state $S$ is calculated using the original state $s'$, the state $S$ and the symbol vector may include:

the transfer error is calculated using:

$$e(t_{l-1}^{s'} \rightarrow t_l^{s}) = r_l - X(t_{l-1}^{s'} \rightarrow t_l^{s}) \cdot \hat{h}_{l-1}^{s'}$$

where $e(t_{l-1}^{s'} \rightarrow t_l^{s})$ represents the transfer error, $r_l$ represents a sequence of received signals at the current moment $l$, $X(t_{l-1}^{s'} \rightarrow t_l^{s})$ represents the symbol vector, and $\hat{h}_{l-1}^{s'}$ represents a channel response estimation value corresponding to the state $s'$ at the previous moment $l$ - 1.

Preferably, the process that a channel response estimation value of the state $S$ at the current moment $l$ is determined using the transfer error may include:

the channel response estimation value corresponding to the state $S$ at the current moment $l$ is calculated using:

$$\hat{h}_l^{s} = \hat{h}_{l-1}^{s'} + \Delta e^{s' \rightarrow s} X^{*}(t_{l-1}^{s'} \rightarrow t_l^{s})$$

where $\hat{h}_l^{s}$ represents the channel response estimation value corresponding to the state $S$ at the current moment $l$, $\Delta$ represents a channel update step-length, $e^{s' \rightarrow s}$ represents the transfer error, and $X^{*}(t_{l-1}^{s'} \rightarrow t_l^{s})$ represents a conjugate vector of the symbol vector.

An uplink receiving device provided by an embodiment of the disclosure includes:

a first processing unit, configured to determine a branch metric, a forward metric and a backward metric of each state at a current moment using a channel response estimation value of each state and a received signal at the current moment; and

a second processing unit, configured to determine an MAP of the received signal at the current moment using the branch metric, the forward metric and the backward metric of each state at the current moment.

Preferably, the first processing unit may include:

a per-survivor processor, configured to determine the channel response estimation value of a current state at the current moment;

a branch metric estimator, configured to determine a branch metric corresponding to a transfer from each state at a previous moment to the current state at the current moment, using the channel response estimation value of the current state at the current moment and the received signal;

a forward metric estimator, configured to determine the forward metric of the current state at the current moment using the branch metric corresponding to the transfer from each state at the previous moment to the current state at the current moment; and

a backward metric estimator, configured to determine the backward metric of the current state at the current moment using the branch metric corresponding to the transfer from each state at the previous moment to the current state at the current moment.

Preferably, the branch metric estimator may be further configured to determine all branch metrics, each corresponding to a transfer from a state at the previous moment to a state at the current moment;

the forward metric estimator may be further configured to calculate all forward metrics, each corresponding to a transfer from each state at a previous moment $l$ - 1 to a state $S$ at current moment $l$ according to all the branch metrics; and

the per-survivor processor may be configured to: take a maximum forward metric in all the forward metrics as a forward metric at the current moment $l$, record an original state $s'$, a state $S$ and a symbol vector corresponding to the forward metric; calculate a transfer error for a transfer from the original state $s'$ to the state $S$ using the original state $s'$, the state $S$ and the symbol vector; and determine a channel response estimation value of the state $S$ at the current moment $l$ using the transfer error.

Preferably, the per-survivor processor may be specifically configured to calculate the transfer error using:

$$e(t_{l-1}^{s'} \rightarrow t_l^s) = r_l - X(t_{l-1}^{s'} \rightarrow t_l^s) \cdot \hat{h}_{l-1}^{s'}$$

where $e(t_{l-1}^{s'} \rightarrow t_l^s)$ represents the transfer error, $r_l$ represents a sequence of received signals at the current moment $l$, $X(t_{l-1}^{s'} \rightarrow t_l^s)$ represents the symbol vector, and $\hat{h}_{l-1}^{s'}$ represents a channel response estimation value corresponding to the state $s'$ at the previous moment $l$ - 1.

Preferably, the per-survivor processor may be specifically configured to calculate the channel response estimation value corresponding to the state $S$ at the current moment $l$ using:

$$\hat{h}_l^s = \hat{h}_{l-1}^{s'} + \Delta e^{s' \rightarrow s} X^*(t_{l-1}^{s'} \rightarrow t_l^s)$$

where $\hat{h}_l^s$ represents the channel response estimation value corresponding to the state $S$ at the current moment $l$, $\Delta$ represents a channel update step-length, $e^{s' \rightarrow s}$ represents the transfer error, and $X^*(t_{l-1}^{s'} \rightarrow t_l^s)$ represents a conjugate vector of the symbol vector.

In the embodiments of the disclosure, a branch metric, a forward metric and a backward metric of each state at a current moment are determined using a channel response estimation value of each state and a received signal at the current moment; and an MAP of the received signal at the current moment is determined using the branch metric, the forward metric and the backward metric of each state at the current moment, so that a high-speed time-varying channel can be tracked in real time by combining MAP balancing with channel update and adaptively determining a channel response estimation value of each state at each moment, thereby effectively overcoming the aforementioned defects of the related art and significantly improving the performance of an MAP balancing algorithm in a high-speed channel.

## BRIEF DESCRIPTION OF THE DRAWINGS

Fig. 1 is a diagram showing a structure of a device for determining a posteriori probability provided by an embodiment of the disclosure;

Fig. 2 is a diagram showing a per-survivor processing flow at a moment $l$+1 provided by an embodiment of the disclosure; and

Fig. 3 is a flowchart showing a method for determining a posteriori probability provided by an embodiment of the disclosure.

## DETAILED DESCRIPTION

Embodiments of the disclosure provide an uplink receiving method and an uplink receiving device, so as to detect an MAP of a received signal in a high-speed channel.

The embodiments of the disclosure are applied to an uplink receiving process, and are adapted to the field of signal reception and detection in digital communications, and in particular to digital reception and detection in a fast time-varying channel.

The embodiments of the disclosure provide an MAP algorithm for adaptive channel tracking in a high-speed channel by an MAP-based per-survivor processing method, and are specifically described below with reference to the drawings.

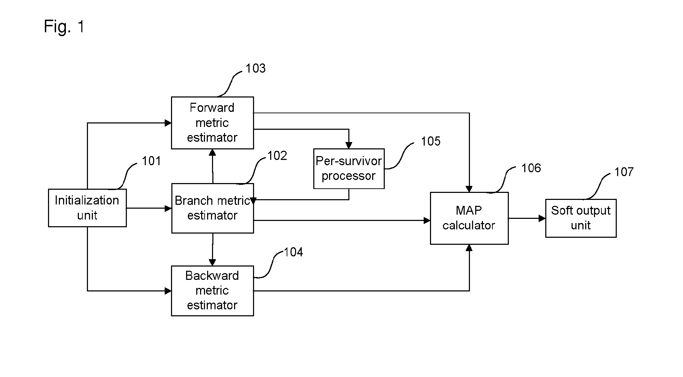

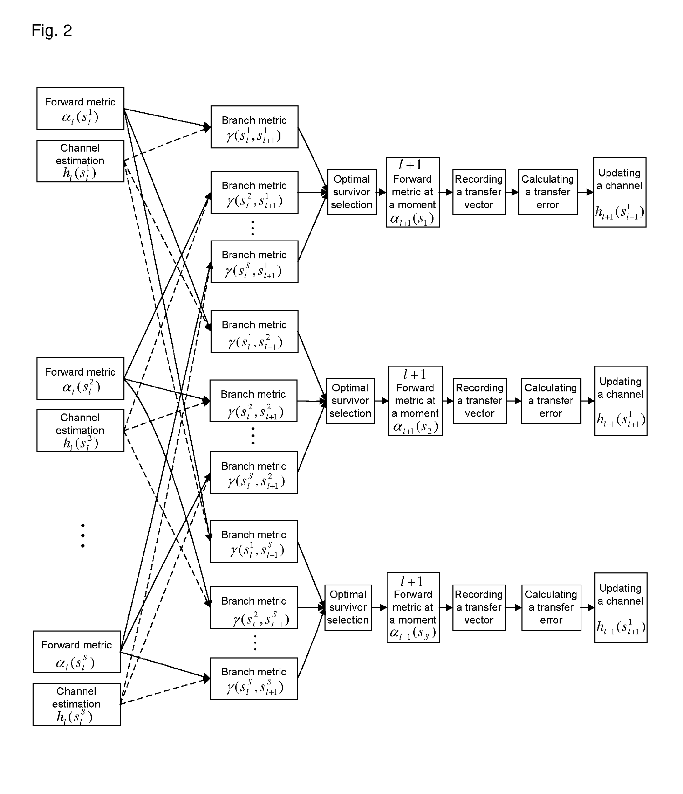

A device for determining a posteriori probability provided by an embodiment of the disclosure is described with reference to Figs. 1 and 2.

An initialization unit 101 is configured to: estimate an initial channel to obtain an initial value of the channel estimation, and initialize a forward metric and a backward metric to determine initial values of the forward metric and the backward metric.

A branch metric estimator 102 is configured to calculate branch metrics corresponding to all states transferred from a pervious moment to a current moment for the use of a forward metric estimator 103, a backward metric estimator 104 and an MAP calculator 106.

For example, if each moment corresponds to five states, $5^2$ (i.e., 25) states are correspondingly transferred from a moment $l$-1 to a moment $l$; therefore, there are 25 branch metrics correspondingly.

The forward metric estimator 103 is configured to estimate a forward metric for the use of the MAP calculator 106.

The backward metric estimator 104 is configured to estimate a backward metric for the use of the MAP calculator 106.

A per-survivor processor 105 is connected with the forward metric estimator 103, and is configured to: for each state $s$ at a current moment, acquire all forward metrics, each corresponding to a transfer from each state of a pervious moment to a state $s$ at the current moment and output by the forward metric estimator 103, select a maximum forward metric from all the forward metrics as a forward metric corresponding to the state $s$ at the current moment, and record a state $s'$ (original state) at a previous moment, a state $s$ at the current moment and a symbol vector corresponding to the forward metric. Then, a transfer from the state $s'$ at the previous moment to the state $s$ at the current moment is referred to as an optimal transfer corresponding to the state $s$ at the current moment. For each state at each moment, the per-survivor processor 105 updates a channel response estimation value corresponding to the state $s$ at the current moment using the state $s'$ (original state) at the previous moment, the state $s$ at the current moment and the symbol vector corresponding to the optimal transfer, and outputs the channel response estimation value to the branch metric estimator 102; and the branch metric estimator 102 calculates a branch metric corresponding to a transfer from each state at the previous moment to the state $s$ at the current moment using the updated channel response estimation value corresponding to the state $s$ at the current moment.

In other words, the per-survivor processor 105 updates a channel response estimation value of each state at each moment in real time using the optimal transfer. The branch metric estimator 102 calculates branch metrics corresponding to all state transfers using the channel response estimation value of each state at each moment determined in real time. Therefore, an MAP algorithm can be applied to a high-speed frequency selective fading channel.

The MAP calculator 106 calculates an MAP of a symbol. Specifically, the MAP calculator 106 multiplies the branch metric obtained by the branch metric estimator 102, the forward metric obtained by the forward metric estimator 103 and the backward metric obtained by the backward metric estimator 104 to obtain the MAP of the symbol.

A soft output unit 107 is configured to output the MAP obtained by the MAP calculator 106.

The initial value of the channel estimation determined by the initialization unit 101 is obtained by estimation on a training sequence, and can be specifically calculated using a moving correlation, a Least Square (LS), a Linear Minimum Mean Square Error (LMMSE) or other algorithms; and the initial values of the forward metric and the backward metric are obtained by initializing the corresponding forward metric and backward metric into the probability of 1 according to an initial state and an end state, for example, the initial values of both the forward metric and the backward metric can be determined as 0.

The branch metric determined by the branch metric estimator 102 refers to a metric transferred from a state at the previous moment to a state at the current moment, i.e., an average Euler distance between a received symbol sequence and an expected symbol sequence. A wireless channel can be equivalent to a viterbi (a maximum likelihood decoding method) encoding system with a single output; the expected symbol sequence and the actually received symbol sequence are one-dimensional; an expected received symbol can be obtained by the dot product of the channel response estimation value of the state at the previous moment and a symbol transfer vector; and the transferred branch metric is obtained by subtracting the expected symbol from the symbol received at the moment.

The forward metric and the backward metric obtained by the forward metric estimator 103 and the backward metric estimator 104 respectively refer to a forward metric and a backward metric of a state at the current moment, and can be specifically obtained by a recursive algorithm. And, the forward metric is obtained by a forward recursive algorithm and the backward metric is obtained by a backward recursive algorithm. The forward metric at the current moment is obtained by multiplying the branch metric by the forward metric at the pervious moment; and the backward metric at the current moment is obtained by multiplying the branch metric by the backward metric at the next moment.

The optimal transfer of each state obtained by the per-survivor processor 105, i.e., a survivor path, refers to an optimal transfer transferred to a state at the current moment. The per-survivor processor 105 is configured to process the optimal transfer according to a Least Mean Square (LMS) rule to obtain a channel response estimation value of each state at the current moment. An operation method specifically includes:

Step 1: An expected symbol corresponding to an optimal transfer is obtained by the dot product of a transfer symbol vector corresponding to the optimal transfer and a state at the previous moment corresponding to the optimal transfer.

Step 2: A transfer error is obtained by subtracting the expected symbol corresponding to the optimal transfer from the symbol actually received at the current moment.

Step 3: A channel update item is obtained by multiplying a channel update step-length, the transfer error and the conjugate vector of the symbol vector corresponding to the optimal transfer.

Step 4: A channel response estimation value corresponding to the state at the current moment is obtained by adding a channel response estimation value at the previous moment corresponding to the optimal transfer to the channel update item obtained in Step 3.

The channel update step-length in Step 3 is a real number which is more than 0 and less than 1, and an optimal value of the channel update step-length can be obtained by simulation based on an actual demand.

Thus, an uplink receiving device provided by an embodiment of the disclosure includes:

a first processing unit, configured to determine a branch metric, a forward metric and a backward metric of each state at a current moment using a channel response estimation value of each state and a received signal at the current moment, wherein

the channel response estimation value of each state at the current moment is obtained by updating the channel response estimation value of each state at the previous moment according to the forward metric at the previous moment; and

a second processing unit, configured to determine an MAP of the received signal at the current moment using the branch metric, the forward metric and the backward metric of each state at the current moment.

Preferably, the first processing unit includes:

a per-survivor processor, configured to determine the channel response estimation value of a current state at the current moment;

a branch metric estimator, configured to determine a branch metric corresponding to a transfer from each state at a previous moment to the current state at the current moment using the channel response estimation value of the current state at the current moment and the received signal;

a forward metric estimator, configured to determine the forward metric of the current state at the current moment using the branch metric corresponding to the transfer from each state at the previous moment to the current state at the current moment; and

a backward metric estimator, configured to determine the backward metric of the current state at the current moment using the branch metric corresponding to the transfer from each state at the previous moment to the current state at the current moment.

Preferably, the branch metric estimator is further configured to determine all branch metrics, each corresponding to a transfer from a state at the previous moment to a state at the current moment;
the forward metric estimator is further configured to calculate all forward metrics, each corresponding to a transfer from each state at a previous moment $l$ - 1 to a state $S$ at current moment $l$ according to all the branch metrics; and
the per-survivor processor is configured to: take a maximum forward metric in all the forward metrics as a forward metric at the current moment $l$, record an original state $s'$, a state $S$ and a symbol vector corresponding to the forward metric; calculate a transfer error for a transfer from the original state $s'$ to the state $S$ using the original state $s'$, the state $S$ and the symbol vector; and determine a channel response estimation value of the state $S$ at the current moment $l$ using the transfer error.

Preferably, the per-survivor processor calculates the transfer error using:

$$e(t_{l-1}^{s'} \to t_{l}^{s}) = r_l - X(t_{l-1}^{s'} \to t_{l}^{s}) \cdot \hat{h}_{l-1}^{s'}$$

where $e(t_{l-1}^{s'} \to t_{l}^{s})$ represents the transfer error, $r_l$ represents a sequence of received signals at the current moment $l$, $X(t_{l-1}^{s'} \to t_{l}^{s})$ represents the symbol vector, and $\hat{h}_{l-1}^{s'}$ represents a channel response estimation value corresponding to the state $s'$ at the previous moment $l$ - 1.

Preferably, the per-survivor processor calculates the channel response estimation value corresponding to state $S$ at current moment $l$ using:

$$\hat{h}_{l}^{s} = \hat{h}_{l-1}^{s'} + \Delta e^{s' \to s} X^{*}(t_{l-1}^{s'} \to t_{l}^{s})$$

where $\hat{h}_{l}^{s}$ represents the channel response estimation value corresponding to the state $S$ at the current moment $l$, $\Delta$ represents a channel update step-length, $e^{s' \to s}$ represents the transfer error, and $X^{*}(t_{l-1}^{s'} \to t_{l}^{s})$ represents a conjugate vector of the symbol vector.

An algorithm provided by an embodiment of the disclosure is elaborated below with reference to specific formulas.

A per-survivor processing flow at a moment $l$+1 provided by an embodiment of the disclosure shown in Fig. 2 is specifically described by taking balanced demodulation for a Global System for Mobile Communications (GSM/EDGE) as an example.

It is assumed that a balanced demodulator receives a sequence **r** and information bit is of equal probability, the formula for calculating a posteriori probability by the BCJR algorithm is:

$$L(u_l) = \ln \left[ \frac{p(u_l = +1 \mid \mathbf{r})}{p(u_l = -1 \mid \mathbf{r})} \right]$$

$$(l)$$

In Formula (I), $L(u_l)$ is referred to as an A Posteriori Probability Likelyhood (APPL) value of each information bit, $p(u_l = +1|\mathbf{r})$ represents a probability that first information bit is +1 in the case of a received sequence r, and $p(u_l = -1|\mathbf{r})$ represents a probability that the first information bit is -1 in the case of the received sequence r.

An output of the balanced demodulator is:

$$u_n = \begin{cases} +1 & \text{if } L(u_n) > 0 \\ -1 & \text{if } L(u_n) < 0 \end{cases} \quad n = 0,1.....h-1 \tag{II}$$

where $h$=mK, and m represents the number of bits occupied by a symbol.

Furthermore,

$$p(u_l = +1 | \mathbf{r}) = \frac{p(u_l = +1, \mathbf{r})}{p(\mathbf{r})} = \frac{\sum_{\mathbf{u} \in U^+_l} p(\mathbf{r} | \mathbf{v}) p(\mathbf{u})}{\sum_{\mathbf{u}} p(\mathbf{r} | \mathbf{v}) p(\mathbf{u})} \tag{III}$$

where $U^+_l$ represents a set of all information sequences in which $u_l$ = +1, and v represents a transmitted codeword, to which an information sequence corresponds is **u**. For example, v=[4,7,0], its corresponding information sequence is **u**=[100,111,000]. $p(\mathbf{r}|\mathbf{v})$ $p(\mathbf{r}|\mathbf{v})$ represents a Probability Density function (PDF) that the received sequence is r given the information sequence **u**. Likewise, if the expression $p(u_l = -1|\mathbf{r})$ is given, Formula (I) can be rewritten as:

$$L(u_l) = \ln \left[ \frac{\sum_{\mathbf{u} \in U^+_l} p(\mathbf{r} | \mathbf{v}) p(\mathbf{u})}{\sum_{\mathbf{u} \in U^-_l} p(\mathbf{r} | \mathbf{v}) p(\mathbf{u})} \right] \tag{IV}$$

where $U^-_l$ represents a set of all information sequences in which $u_l$ =-1.

By the MAP algorithm, the APPL value $L(u_l)$ of each information bit can be calculated according to Formula (IV) and then a recovered information bit is obtained according to Formula (II). However, this results in much calculation.

For a code with a grid structure and having a finite state, such as a short convolutional code with a constrain length (an FIR filter can be approximately taken as a convolutional code encoder), a processing process can be simplified greatly using a recursive calculation based on a grid diagram.

At first, using the grid diagram structure of a code, Formula (III) can be rewritten as:

$$p(u_l = +1 | \mathbf{r}) = \frac{p(u_l = +1, \mathbf{r})}{p(\mathbf{r})} = \frac{\sum_{(s_l, s_{l+1}) \in \sum_l^+} p(s_l, s_{l+1}, \mathbf{r})}{p(\mathbf{r})} \tag{V}$$

where $\sum_l^+$ represents a set of all state transfers from a state $s_l$ at a moment $l$ to a state $s_{l+1}$ at a moment $l+1$ caused by an input bit $u_l$ =+1 Likewise, if the expression $p(u_l = -1|\mathbf{r})$ is given, Formula (IV) can be rewritten as:

$$L(u_l) = \ln \left[ \frac{\sum_{(s_l, s_{l+1}) \in \sum_l^+} p(s_l, s_{l+1}, \mathbf{r})}{\sum_{(s_l, s_{l+1}) \in \sum_l^-} p(s_l, s_{l+1}, \mathbf{r})} \right] \tag{VI}$$

Formulas (VI) and (IV) are equivalent for the APPL value $L(u_l), l$=0,1,....$h$-1; and it can be known by deduction in Formula (VI) that:

$$p(s_l, s_{l+1}, \mathbf{r}) = p(\mathbf{r}_{t>l} \mid s_{l+1}) p(s_{l+1}, \mathbf{r}_l \mid s_l) p(s_l, \mathbf{r}_{t<l})$$ (VII)

Define:

$$\alpha_l(s_l) \equiv p(s_l, \mathbf{r}_{t<l})$$
$$\gamma(s_l, s_{l+1}) \equiv p(s_{l+1}, \mathbf{r}_l \mid s_l)$$
$$\beta_l(s_l) \equiv p(\mathbf{r}_{t>l} \mid s_{l+1})$$ (VIII)

where $\alpha_l(s_l)$ represents a forward metric, $\gamma(s_l, s_{l+1})$ represents a branch metric, and $\beta_l(s_l)$ represents a backward metric.
Thus, Formula (VII) can be rewritten as:

$$p(s_l, s_{l+1}, \mathbf{r}) = \beta_{l+1}(s_{l+1}) \gamma_l(s_l, s_{l+1}) \alpha_l(s_l)$$ (IX)

For the probability $\alpha_{l+1}(s_{l+1})$, it can be known by deduction that:

$$\alpha_{l+1}(s_{l+1}) = \sum_{s_l \in \sigma_l} \gamma_l(s_{l+1}, s_l) \alpha_l(s_l)$$ (X)

where $\sigma_l$ represents a set of all states at the moment $l$. Therefore, the forward metric $\alpha_{l+1}(s_{l+1})$ in each state $s_{l+1}$ at the moment $l+1$ can be calculated by a forward recursive algorithm. Similarly, the formula of probability $\beta_l(s_l)$ can be written as:

$$\beta_l(s_l) = \sum_{s_{l+1} \in \sigma_{l+1}} \gamma_l(s_l, s_{l+1}) \beta(s_{l+1})$$ (XI)

where $\sigma_{l+1}$ represents a set of all states at the moment $l+1$. The backward metric $\beta_l(s_l)$ in each state $s_l$ at the moment $l$ can be calculated by a backward recursive algorithm.
In order to simplify the operation, a logarithmic BCJR algorithm is generally adopted in an implementation process. By deduction, the following formula can be obtained:

$$\gamma_l^*(s_l, s_{l+1}) = \ln(\gamma_l(s_l, s_{l+1})) = -\frac{\left| z_l - h_0 r_{l+1} - \sum_{i=0}^{4} f_i r_{l-i} \right|}{2\sigma^2}$$ (XII)

$$\alpha_{l+1}^*(s_{l+1}) = \ln(\alpha_{l+1}(s_{l+1})) = MAX_{s_l \in \sigma_l}^* \left[ \gamma_l^*(s_{l+1}, s_l) + \alpha_l^*(s_l) \right]$$ (XIII)

$$\beta_l^*(s_l) = \ln(\beta_l(s_l)) = MAX^*_{s_{l+1} \in \sigma_{l+1}} \left[ \gamma_l^*(s_{l+1}, s_l) + \beta_{l+1}^*(s_{l+1}) \right] \tag{XIV}$$

where $\sigma^2$ represents a noise variance and $\gamma_l$ represents a state transfer probability from moment $l$ to moment $l+1$.

Furthermore, $MAX^*(x, y, z) = \ln(e^x, e^y, e^z) = MAX^*(MAX^*(x, y), z)$.

Initial conditions of recursion are:

$$\alpha_0^*(s_0) = \ln(\alpha_0(s_0)) = \begin{cases} 0 & s_0=1 \text{ or } s_0=7 \\ -\infty & s_0 \neq 0 \end{cases} \tag{XV}$$

$$\beta_K^*(s_{l+1}) = \ln(\beta_K(s_{l+1})) = \begin{cases} 0 & s_{l+1}=0 \\ -\infty & s_{l+1} \neq 0 \end{cases} \tag{XVI}$$

then the APPL value of each symbol is:

$$\begin{aligned} L(u_l) = & \ln( \sum_{(s_l, s_{l+1}) \in \sum_l^+} e^{\left[ \beta_{l+1}^*(s_{l+1}) + \gamma_l^*(s_l, s_{l+1}) + \alpha_l^*(s_l) \right]} ) \\ & - \ln( \sum_{(s_l, s_{l+1}) \in \sum_l^-} e^{\left[ \beta_{l+1}^*(s_{l+1}) + \gamma_l^*(s_l, s_{l+1}) + \alpha_l^*(s_l) \right]} ) \\ = & MAX^*_{(s_l, s_{l+1}) \in \sum_l^+} (\beta_{l+1}^*(s_{l+1}) + \gamma_l^*(s_l, s_{l+1}) + \alpha_l^*(s_l)) \\ & - MAX^*_{(s_l, s_{l+1}) \in \sum_l^-} (\beta_{l+1}^*(s_{l+1}) + \gamma_l^*(s_l, s_{l+1}) + \alpha_l^*(s_l)) \end{aligned} \tag{XVII}$$

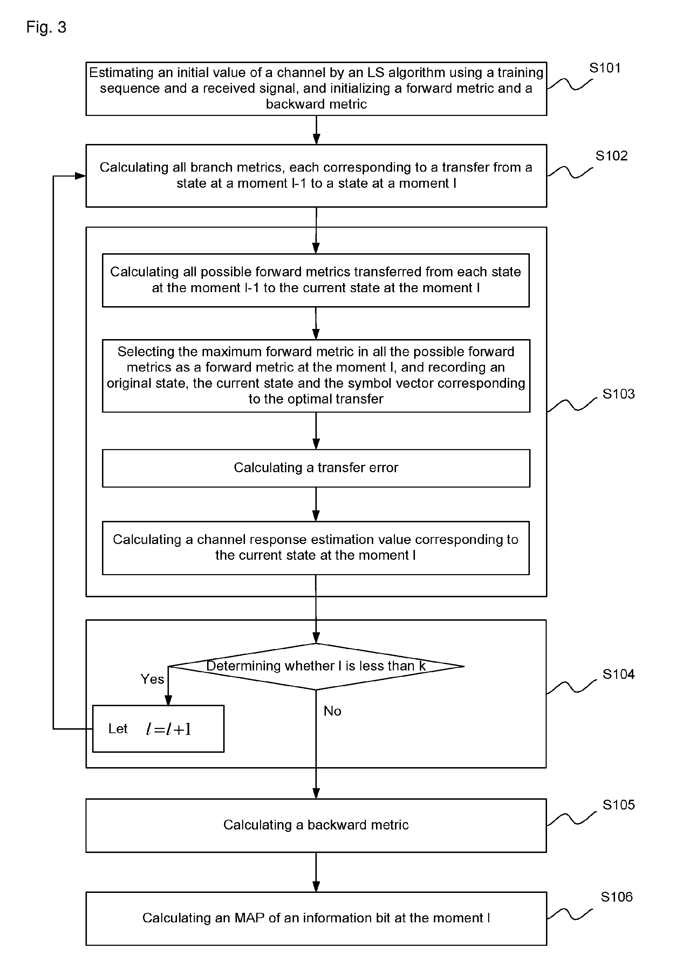

Referring to Fig. 3, an MAP-based per-survivor processing method provided by an embodiment of the disclosure includes:

S101: An initial value of a channel is estimated by an LS algorithm using a training sequence and a received signal, and a forward metric $\alpha_0(s)$ and a backward metric $\beta_K(s)$ are initialized according to Formulas (XV) and (XVI).

S102: All branch metrics $\gamma_l(s', s)$ transferred from a state $s'$ at a moment $l$-1 to a state $s$ at a moment $l$ are calculated according to Formula (XII), where $l=0,1,...,K$-1 and $s \in \{0,1,\cdots S\text{-}1\}$, $s' \in \{0,1,\cdots S\text{-}1\}$ (S is a state number).

S103: For each state $s$ at the moment $l$, processing step-lengths are specifically as follows:

Step A: All possible forward metrics $\alpha_{l+1}(s', s)$ transferred from each state at the moment $l$-1 to the state $s$ at the moment $l$ are calculated according to Formula (XIII).

Step B: A maximum forward metric is selected from all the possible forward metrics $\alpha_{l+1}(s, s')$ in Step A as a forward metric $\alpha_{l+1}^*(s)$ at the moment $l$; and an original state $s'$ corresponding to the optimal transfer and a symbol vector $X(t_{l-1}^{s'} \to t_l^s)$ corresponding to the optimal transfer are recorded.

Step C: An optimal transfer error $e(t_{l-1}^{s'} \to t_l^s) = r_l - X(t_{l-1}^{s'} \to t_l^s) \cdot \hat{h}_{l-1}^{s'}$ is calculated, where $r_l$ is the $l_{\text{th}}$

received symbol, and $\hat{h}_{l-1}^{s'}$ is a channel response estimation value of the state *s'* at the moment *l*-1.

Step D: A channel response estimation value corresponding to the state *s* at the moment *l* is calculated according to the following formula:

$$\hat{h}_l^s = \hat{h}_{l-1}^{s'} + \Delta e^{s' \to s} X^*(t_{l-1}^{s'} \to t_l^s)$$

where $\Delta$ represents a channel update step-length, of which a value is preset in a range from 0 to 1 and of which a specific value can be set based on an actual demand.

S104: It is determined whether *l* is less than K, when *l* is less than *K* (*K* is the sequence length of a received signal at the current moment), it is assumed that *l* = *l* + 1 and Steps 102 and 103 are repeated; otherwise, S105 is executed. In other words, When Steps 102 and 103 are executed each time, forward metrics of all states of one symbol of the received signal at the current moment are calculated. After forward metrics of all states of all symbols of the received signal at the current moment are calculated, S105 is executed.

S105: A backward metric $\beta_{l-1}^*(s')$ is calculated according to Formula (XIV).

S106: An MAP $L(u_n), n=0,1,\cdots,h$-1 of an information bit $u_n$ at the moment *l* is calculated according to Formula (XVII).

Thus, an uplink receiving method provided by an embodiment of the disclosure includes:

a branch metric, a forward metric and a backward metric of each state at a current moment are determined using a channel response estimation value of each state and a received signal at the current moment; and
an MAP of the received signal at the current moment is determined using the branch metric, the forward metric and the backward metric of each state at the current moment.

Preferably, the process that a branch metric, a forward metric and a backward metric of each state at a current moment are determined using a channel response estimation value of each state and a received signal at the current moment includes:

the channel response estimation value of a current state at the current moment is determined;
a branch metric corresponding to a transfer from each state at a previous moment to the current state at the current moment is determined using the channel response estimation value of the current state at the current moment and the received signal; and
the forward metric and the backward metric of the current state at the current moment are determined using the branch metric corresponding to the transfer from each state at the previous moment to the current state at the current moment.

Preferably, the process that a channel response estimation value of a current state at the current moment is determined includes:

all branch metrics, each corresponding to a transfer from a state at the previous moment to a state at the current moment are determined;
all forward metrics, each corresponding to a transfer from each state at a previous moment *l* - 1 to a state *S* at a current moment *l* are calculated according to all the branch metrics;
the maximum forward metric in all the forward metrics is taken as a forward metric at the current moment *l*, and an original state *s'*, a state *S* and a symbol vector corresponding to the forward metric are recorded;
a transfer error for a transfer from the original state *s'* to the state *S* is calculated using the original state *s'*, the state *S* and the symbol vector; and
a channel response estimation value of the state *S* at the current moment *l* is determined using the transfer error.

Preferably, the process that a transfer error for a transfer from the original state *s'* to the state *S* is calculated using the original state *s'*, the state *S* and the symbol vector includes:

the transfer error is calculated using:

$$e(t_{l-1}^{s'} \rightarrow t_{l}^{s}) = r_{l} - X(t_{l-1}^{s'} \rightarrow t_{l}^{s}) \cdot \hat{h}_{l-1}^{s'}$$

where $e(t_{l-1}^{s'} \rightarrow t_{l}^{s})$ represents the transfer error, $r_l$ represents a sequence of received signals at the current moment $l$, $X(t_{l-1}^{s'} \rightarrow t_{l}^{s})$ represents the symbol vector, and $\hat{h}_{l-1}^{s'}$ represents a channel response estimation value corresponding to the state $s'$ at the previous moment $l$ - 1.

Preferably, the process that a channel response estimation value of the state $S$ at the current moment $l$ is determined using the transfer error includes:

the channel response estimation value corresponding to the state $S$ at the current moment $l$ is calculated using:

$$\hat{h}_{l}^{s} = \hat{h}_{l-1}^{s'} + \Delta e^{s' \rightarrow s} X^{*}(t_{l-1}^{s'} \rightarrow t_{l}^{s})$$

where $\hat{h}_{l}^{s}$ represents the channel response estimation value corresponding to the state $S$ at the current moment $l$, $\Delta$ represents a channel update step-length, $e^{s' \rightarrow s}$ represents the transfer error, and $X^{*}(t_{l-1}^{s'} \rightarrow t_{l}^{s})$ represents a conjugate vector of the symbol vector.

To sum up, through the embodiments of the disclosure, a channel can be tracked in real time by combining MAP balancing with channel update and adaptively updating an initial value of a high-speed time-varying channel response. Therefore, the performance of an MAP balancing algorithm in a high-speed channel is improved significantly. In addition, the technical solutions provided by the embodiments of the disclosure are simple and easy to implement, and low in complexity, and can significantly improve the performance of the MAP balancing algorithm in the high-speed channel, in particular the performance of a high-code-rate service in a high-speed channel.

Those skilled in the art should understand that the embodiments of the disclosure can be provided as a method, a system or a computer program product. Therefore, the disclosure can be implemented in the form of complete hardware, complete software embodiment, or an embodiment of combining hardware and software. Moreover, the disclosure can be applied in the form of computer program product implemented on one or more computer-readable storage medium (including, but not limited to, a disk memory, an optical memory and the like) including computer-readable program codes.

The disclosure is described with reference to the flowchart and/or the block diagram of the method, device (system) and computer program product according to the embodiments of the disclosure. It should be understood that every flow and/or block in the flowchart and/or the block diagram, and the combination of flow and/or block in the flowchart and/or the block diagram can be implemented by computer program instructions. Such computer program instructions can be provided to a processor of a general computer, a dedicated computer, an embedded processor or other programmable data processing devices to produce a machine, so that a device configured to implement the functions specified in one or more flows in the flowchart and/or one or more blocks in the block diagram can be produced through the instructions executed by a processor of a computer or other programmable data processing devices.

These computer program instructions can also be stored in a computer-readable memory capable of booting a computer or other programmable data processing devices to run in a specified mode, so that they produce a product including a command device which implements the functions specified in one or more flows in the flowchart and/or one or more blocks in the block diagram.

These computer program instructions can also be loaded in a computer and other programmable data processing devices to execute a series of operating steps thereon to produce processing implemented by a computer, so that they provide the steps for implementing the functions specified in one or more flows in the flowchart and/or one or more blocks in the block diagram.

Obviously, various modifications and variations can be made by those skilled in the art to the disclosure without departing from the concept and scope of the disclosure. Thus, if these modifications and variations of the disclosure fall within the scope of the claims of the disclosure and equivalent technologies thereof, the disclosure is also intended to include these modifications and variations.

**Claims**

1.  An uplink receiving method, comprising:

    determining a branch metric, a forward metric and a backward metric of each state at a current moment using a channel response estimation value of each state and a received signal at the current moment; and
    determining a Maximum A Posteriori (MAP) of the received signal at the current moment using the branch metric, the forward metric and the backward metric of each state at the current moment.

2.  The method according to claim 1, wherein the determining a branch metric, a forward metric and a backward metric of each state at a current moment using a channel response estimation value of each state and a received signal at the current moment comprises:

    determining the channel response estimation value of a current state at the current moment;
    determining a branch metric corresponding to a transfer from each state at a previous moment to the current state at the current moment, using the channel response estimation value of the current state at the current moment and the received signal; and
    determining the forward metric and the backward metric of the current state at the current moment, using the branch metric corresponding to the transfer from each state at the previous moment to the current state at the current moment.

3.  The method according to claim 2, wherein the determining a channel response estimation value of a current state at the current moment comprises:

    determining all branch metrics, each corresponding to a transfer from a state at the previous moment to a state at the current moment;
    calculating all forward metrics, each corresponding to a transfer from each state at a previous moment $l$ - 1 to a state $S$ at a current moment $l$ according to all the branch metrics;
    taking a maximum forward metric in all the forward metrics as a forward metric at the current moment $l$, and recording an original state $s'$, a state $S$ and a symbol vector corresponding to the forward metric;
    calculating a transfer error for a transfer from the original state $s'$ to the state $S$ using the original state $s'$, the state $S$ and the symbol vector; and
    determining a channel response estimation value of the state $S$ at the current moment $l$ using the transfer error.

4.  The method according to claim 3, wherein the calculating a transfer error for a transfer from the original state $s'$ to the state $S$ using the original state $s'$, the state $S$ and the symbol vector comprises:

    calculating the transfer error using:

$$e(t_{l-1}^{s'} \rightarrow t_l^s) = r_l - X(t_{l-1}^{s'} \rightarrow t_l^s) \cdot \hat{h}_{l-1}^{s'}$$

    where $e(t_{l-1}^{s'} \rightarrow t_l^s)$ represents the transfer error, $r_l$ represents a sequence of received signals at the current moment $l$, $X(t_{l-1}^{s'} \rightarrow t_l^s)$ represents the symbol vector, and $\hat{h}_{l-1}^{s'}$ represents a channel response estimation value corresponding to the state $s'$ at the previous moment $l$ - 1.

5.  The method according to claim 3, wherein the determining a channel response estimation value of the state $S$ at the current moment $l$ using the transfer error comprises:

    calculating the channel response estimation value corresponding to the state $S$ at the current moment $l$ using:

$$\hat{h}_l^s = \hat{h}_{l-1}^{s'} + \Delta e^{s' \to s} X^*(t_{l-1}^{s'} \to t_l^s)$$

where $\hat{h}_l^s$ represents the channel response estimation value corresponding to the state $S$ at the current moment $l$, $\Delta$ represents a channel update step-length, $e^{s' \to s}$ represents the transfer error, and $X^*(t_{l-1}^{s'} \to t_l^s)$ represents a conjugate vector of the symbol vector.

6. An uplink receiving device, comprising:

a first processing unit, configured to determine a branch metric, a forward metric and a backward metric of each state at a current moment using a channel response estimation value of each state and a received signal at the current moment; and
a second processing unit, configured to determine a Maximum A Posteriori (MAP) of the received signal at the current moment using the branch metric, the forward metric and the backward metric of each state at the current moment.

7. The device according to claim 6, wherein the first processing unit comprises:

a per-survivor processor, configured to determine the channel response estimation value of a current state at the current moment;
a branch metric estimator, configured to determine a branch metric corresponding to a transfer from each state at a previous moment to the current state at the current moment using the channel response estimation value of the current state at the current moment and the received signal;
a forward metric estimator, configured to determine the forward metric of the current state at the current moment using the branch metric corresponding to the transfer from each state at the previous moment to the current state at the current moment; and
a backward metric estimator, configured to determine the backward metric of the current state at the current moment using the branch metric corresponding to the transfer from each state at the previous moment to the current state at the current moment.

8. The device according to claim 7, wherein
the branch metric estimator is further configured to determine all branch metrics, each corresponding to a transfer from a state at the previous moment to a state at the current moment;
the forward metric estimator is further configured to calculate all forward metrics, each corresponding to a transfer from each state at a previous moment $l$ - 1 to a state $S$ at current moment $l$ according to all the branch metrics; and
the per-survivor processor is configured to: take a maximum forward metric in all the forward metrics as a forward metric at the current moment $l$, record an original state $s'$, a state $S$ and a symbol vector corresponding to the forward metric; calculate a transfer error for a transfer from the original state $s'$ to the state $S$ using the original state $s'$, the state $S$ and the symbol vector; and determine a channel response estimation value of the state $S$ at the current moment $l$ using the transfer error.

9. The device according to claim 8, wherein the per-survivor processor is configured to calculate the transfer error using:

$$e(t_{l-1}^{s'} \to t_l^s) = r_l - X(t_{l-1}^{s'} \to t_l^s) \cdot \hat{h}_{l-1}^{s'}$$

where $e(t_{l-1}^{s'} \to t_l^s)$ represents the transfer error, $r_l$ represents a sequence of received signals at the current moment $l$, $X(t_{l-1}^{s'} \to t_l^s)$ represents the symbol vector, and $\hat{h}_{l-1}^{s'}$ represents a channel response estimation value corresponding to the state $s'$ at the previous moment $l$ - 1.

10. The device according to claim 8, wherein the per-survivor processor is configured to calculate the channel response estimation value corresponding to the state *S* at the current moment *l* using:

$$\hat{h}_l^s = \hat{h}_{l-1}^{s'} + \Delta e^{s' \to s} X^* (t_{l-1}^{s'} \to t_l^s)$$

where $\hat{h}_l^s$ represents the channel response estimation value corresponding to the state *S* at the current moment *l*, $\Delta$ represents a channel update step-length, $e^{s' \to s}$ represents the transfer error, and $X^* (t_{l-1}^{s'} \to t_l^s)$ represents a conjugate vector of the symbol vector.

$$\hat{h}_l^s = \hat{h}_{l-1}^{s'} + \Delta e^{s' \to s} X^* (t_{l-1}^{s'} \to t_l^s)$$

Fig. 1

Fig. 2

Fig. 3

Estimating an initial value of a channel by an LS algorithm using a training sequence and a received signal, and initializing a forward metric and a backward metric — S101

Calculating all branch metrics, each corresponding to a transfer from a state at a moment I-1 to a state at a moment I — S102

Calculating all possible forward metrics transferred from each state at the moment I-1 to the current state at the moment I

Selecting the maximum forward metric in all the possible forward metrics as a forward metric at the moment I, and recording an original state, the current state and the symbol vector corresponding to the optimal transfer

Calculating a transfer error

Calculating a channel response estimation value corresponding to the current state at the moment I

— S103

Determining whether I is less than k

Yes

Let $l = l + 1$

No

— S104

Calculating a backward metric — S105

Calculating an MAP of an information bit at the moment I — S106

<table>
<tr><td colspan="2"><h2>INTERNATIONAL SEARCH REPORT</h2></td><td>International application No.<br><br>**PCT/CN2012/070941**</td></tr>
</table>

**A. CLASSIFICATION OF SUBJECT MATTER**

H04L 1/00 (2006.01) i

According to International Patent Classification (IPC) or to both national classification and IPC

**B. FIELDS SEARCHED**

Minimum documentation searched (classification system followed by classification symbols)

IPC: H04L; H04B

Documentation searched other than minimum documentation to the extent that such documents are included in the fields searched

Electronic data base consulted during the international search (name of data base and, where practicable, search terms used)

CNABS, CNTXT, CNKI: Maximum A Posteriori, measurement, recursive vector, state transition probability

VEN: MAP, Maximum A Posteriori, recursive vector, branch metric, state transition probability

**C. DOCUMENTS CONSIDERED TO BE RELEVANT**

| Category* | Citation of document, with indication, where appropriate, of the relevant passages | Relevant to claim No. |
|---|---|---|
| X | CN 101272363 A (SHANDONG UNIVERSITY), 24 September 2008 (24.09.2008), abstract, and claims 1-2 | 1, 2, 6, 7 |
| A | the whole document | 3-5, 8-10 |
| A | ZHANG, Ting; Research on Configurable Turbo Decoder in Wireless Channel, CHINA MASTER'S THESES FULL-TEXT DATABASE, pages 17-26, 01 July 2009 | 1-10 |
| A | WO 2010033537 A1 (ANALOG DEVICES, INC.), 25 March 2010 (25.03.2010), the whole document | 1-10 |

☐ Further documents are listed in the continuation of Box C.          ☒ See patent family annex.

| | | |
|---|---|---|
| \* Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 17 April 2012 (17.04.2012) | **03 May 2012 (03.05.2012)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**WANG, Yi**<br><br>Telephone No.: (86-10) **62412021** |
|---|---|

Form PCT/ISA/210 (second sheet) (July 2009)

<table>
<tr><td colspan="2"><strong>INTERNATIONAL SEARCH REPORT</strong><br>Information on patent family members</td><td colspan="2">International application No.<br><br><strong>PCT/CN2012/070941</strong></td></tr>
</table>

| Patent Documents referred in the Report | Publication Date | Patent Family | Publication Date |
|---|---|---|---|
| CN 101272363 A | 24.09.2008 | CN 101272363 B | 01.12.2010 |
| WO 2010033537 A1 | 25.03.2010 | EP 2332260 A1 | 15.06.2011 |
|  |  | US 2010070819 A1 | 18.03.2010 |
|  |  | CN 102171937 A | 31.08.2011 |

Form PCT/ISA/210 (patent family annex) (July 2009)